# DEMANDE DE BREVET EUROPEEN

(11) **EP 2 243 387 A2**
(43) Date de publication de la demande: **27.10.2010**
(21) Numéro de dépôt: 10075142.9
(22) Date de dépôt: 28.07.2005
(51) Int. Cl.: A41D 27/24, B29C 65/08

(54) **Article textile**

(30) Priorité: 29.07.2004 FR 0408405; 26.07.2005 FR 0508010
(62) Demande divisionnaire de: 05793062.0
(71) Demandeur: SALOMON S.A.S., 74370 Metz-Tessy (FR)
(72) Inventeur: Fellouhe, Catherine, 74800 Vieugy (FR); Roux, Isabelle, 74370 Metz-Tessy (FR); Chapuis, Serge, 73610 Lepin Le Lac (FR)

(57) **Abrégé**

Article textile comportant au moins un premier et second panneau respectivement (21,110, 22,120) assemblés par soudure selon une ligne de soudure (25,140), cette soudure étant tournée vers l'extérieur et recouverte d'une bande de renfort (30,130). La ligne de soudure a une épaisseur d'environ 1mm ou moins, les premier et second panneaux (21,110, 22,120) sont en un matériau élastique et la bande de renfort (30,130) a un taux d'élongation inférieur à celui de la soudure (25,140).

## Description

La présente invention a pour objet un procédé d'assemblage de panneaux textiles et les produits obtenus à l'aide de ce procédé.

La présente invention concerne plus particulièrement le domaine des vêtements ou articles d'habillement et/ou sacs.

Elle concerne notamment le domaine des vêtements de sport et/ou des vêtements devant être portés à même la peau, tels que sous-vêtements, maillots de bain, articles de lingerie, et vise à améliorer le confort de vêtements de ce type. Elle concerne également le domaine des vêtements de sport, sacs de sport et/ou des vêtements étanches et/ou résistants à l'eau.

En matière de lingerie les articles d'habillement sont généralement assemblés par des coutures extensibles de type couture surjet ou couture anglaise mais ces coutures ne sont pas très plates et peuvent donc être risque d'inconfort.

D'une manière générale, plus le vêtement est près du corps et sollicité lors de l'usage, par exemple lors de la pratique d'un sport, plus l'on cherchera à éviter les frottements entre le corps et les coutures d'assemblage du vêtement et donc à limiter l'épaisseur de celles-ci.

Par ailleurs, il est bien connu dans l'industrie du vêtement d'utiliser des matériaux revêtus d'une enduction étanche ou des laminés pour obtenir des vêtements étanches.

L'enduction peut être soit externe (exemple du ciré), soit effectuée sur la face interne du vêtement, il s'agit alors généralement d'une enduction PU ou PVC.

Les laminés sont des matières composites réunissant plusieurs couches contrecollées ensemble, l'une d'entre elles étant généralement constituée par une membrane imperméable et/ou respiro-étanche et/ou coupe-vent. Ces membranes peuvent être en PTFE, PU....

Des exemples typiques de tels laminés sont ceux munis d'une membrane dite "respiro-étanche", c'est-à-dire étanche à l'eau mais perméable à la vapeur d'eau et vendus sous la dénomination commerciale Gore Tex®, Sympatex®. Ces laminés peuvent être constitués de deux ou trois couches, selon que le laminé doit être intégré dans le vêtement avec d'autres couches, ou utilisé tel quel comme dans le cas du laminé trois couches, désigné usuellement par le terme "three-ply", la membrane étant interposée entre un tissu de doublure interne et un tissu d'enveloppe externe

Dans le cadre de la présente description le terme matériau laminé sera utilisé pour désigner à la fois les textiles enduits (intérieurement ou extérieurement) et les matériaux textiles laminés munis d'un film ou membrane faisant office de barrière coupe-vent, étanche ou résistant à l'eau...etc. On désignera également par "couche de protection" "couche fonctionnelle", "membrane", "traitement" ou "enduction" toute membrane ou enduction qui constitue au minimum une barrière à la pénétration d'eau ou autre liquide.

Généralement les vêtements sont constitués de pièces ou panneaux de ces laminés, ceux-ci étant assemblés par des coutures.

Pour des vêtements qui, au final, doivent être étanches les coutures doivent ensuite être rendues étanches, généralement par l'application d'un ruban d'étanchéité muni d'un adhésif thermoplastique ou thermofusible.

Pour des raisons pratiques et esthétiques, l'étanchage des coutures est généralement effectué à l'intérieur du vêtement.

Le collage des rubans d'étanchéité pose toutefois des problèmes, notamment en fonction de matériau constituant la première couche du laminé (ou couche de doublure), ceci surtout pour des laminés trois couches tels que décrits ci-avant.

Ainsi le US 2005/0081281 explique qu'en fonction de la nature de la couche de doublure, le collage peut être insuffisant pour une bonne étanchéité de la couture et que pour résoudre ce problème les matériaux constituant les doublures sont généralement des jerseys simples, à structure ouverte de type mono filament, ce qui réduit le choix de matériau disponible pour de telles doublures. Des colles basse viscosité ou liquides ont également été développées pour résoudre ce problème et permettre aux colles de pénétrer à l'intérieur de structures plus complexes (cf. US 6 387 994 et WO 01/26495).

Le problème de collage se pose également en ce qui concerne les matériaux traités déperlants (water repellent) et/ou antitaches (stain repellent), ce qui est notamment le cas des matériaux revêtus d'une enduction telle que connue sous la dénomination commerciale Scotchguard ®, ou Teflon ®, à savoir une enduction à base de fluor, Teflon ou autre. De tels traitements déperlants sont également appelés traitements déperlants durables ou également DWR (durable water repellent). Par la suite le terme traitement déperlant désignera tout traitement déperlant et/ou antitaches et/ou DWR.

Pour résoudre ces problèmes, le US 2005/0022920 précité propose d'enlever ou araser (par rabotage, meulage, abrasion, coupe....) une partie du matériau textile de la doublure sur au moins une partie de la zone de couture à étancher, le ruban d'étanchage étant ensuite appliqué sur toute cette zone.

Une telle opération de parage ou d'arasage est très compliquée et délicate à effectuer, il ne faut en effet pas endommager la membrane située en dessous de la couche arasée. Il faut par ailleurs enlever une quantité de textile suffisante pour atteindre le but souhaité. Par ailleurs les épaisseurs de couches textiles peuvent varier, de façon plus ou moins importante, notamment s'il s'agit de matériau de type polaire et le réglage de la machine procédant au parage est donc très délicat et compliqué à réaliser.

Un but de la présente invention est de proposer une nouvelle conception de coutures d'assemblage d'un vêtement qui soit compatible avec une utilisation à même la peau.

Un but est également de proposer un nouveau concept d'assemblage d'un article d'habillement permettant de minimiser encore les frictions d'un vêtement porté à même la peau pendant l'utilisation.

Un autre but est de proposer un concept d'assemblage de matériaux textiles permettant une nouvelle esthétique.

Un autre but est de proposer un nouveau concept d'assemblage et d'étanchage de coutures d'un vêtement ou article en matériau textile laminé.

Ce ou ces buts sont atteints dans le procédé d'assemblage de panneaux textiles selon l'invention, qui est du type comportant au moins un premier et un second panneau à assembler l'un à l'autre, par le fait qu'il consiste à :
- superposer le premier et second panneau de façon que leurs faces internes soient en vis-à-vis,
- souder les deux parties selon une ligne de soudure déterminée,
- mettre à plat les deux panneaux, la ligne de soudure étant disposée côté externe,
- appliquer une bande de renfort de la ligne de soudure côté externe de l'article.

Par ce procédé d'assemblage, l'ensemble des parties en saillie de la ligne de soudure, ou "couture" d'assemblage se retrouvent à l'extérieur de l'article et lorsque l'article est un vêtement, n'engendrent aucune friction par rapport au corps, même lorsque celui-ci est en mouvement.

Il en résulte un confort inégalé puisque plus aucune "couture" ou soudure ne subsiste à l'intérieur du vêtement et donc plus aucun risque de friction avec une telle "couture" même dans le cas d'un vêtement très serré et/ou près du corps.

Par ailleurs le recouvrement de la ligne de soudure par une bande permet non seulement de renforcer ladite soudure mais également de lui conférer une esthétique très particulière. Selon un mode de réalisation, le procédé comporte l'étape consistant à couper l'excès de matière au-delà de la ligne de soudure avant la mise à plat, de ce fait la ligne de soudure "apparaissant" côté externe a une épaisseur minimale, non visible sous la bande de renfort. On a alors l'impression que l'article est assemblé uniquement par les bandes de renfort.

Selon un autre mode de réalisation, le procédé d'assemblage est appliqué à des panneaux textiles laminés et comprend les étapes consistant à :
- fournir au moins deux panneaux laminés, chaque panneau laminé comprenant au moins une couche de protection résistante à l'eau fixée sur le matériau textile,
- à assembler les deux panneaux selon une ligne d'assemblage déterminée,
- à mettre à plat les deux panneaux laminés,
- à pré positionner par collage superficiel un ruban d'étanchéité muni d'un adhésif sur la ligne d'assemblage,
- à soumettre la ligne d'assemblage à une température θ1 supérieure à la température de fusion de l'adhésif, sous une pression P déterminée pendant une durée T déterminée, de façon à faire fluer au moins une partie de l'adhésif dans les interstices des fibres du matériau textile,
- à soumettre, à l'issue de la durée T, la ligne d'assemblage à un refroidissement accéléré par pressage à froid de façon à figer et solidifier l'adhésif

Un tel procédé permet en effet de garantir un parfait fluage de l'adhésif dans les interstices entre les fibres du matériau textile et de mouiller ainsi lesdites fibres, même si celui-ci est traité, et donc de garantir l'étanchéité souhaitée, ainsi que de garantir, par le refroidissement accéléré, l'absence de retrait ou de décollement de l'adhésif et donc de garantir l'étanchéité ou déperlance du produit final. Un tel procédé permet d'obtenir un effet esthétique très intéressant, tout en étant compatible avec des matériaux textiles enduits.

De toute façon, l'invention sera mieux comprise et d'autres caractéristiques de celle-ci seront mises en évidence à l'aide de la description qui suit en référence au dessin schématique annexé dans lequel :
- la figure 1 est une vue schématique d'une machine de soudage ultrason,
- la figure 2 est une vue schématique illustrant la première phase du procédé d'assemblage, selon un premier exemple de réalisation,
- la figure 3 est une vue schématique illustrant la seconde phase du procédé d'assemblage, selon un premier exemple de réalisation,
- la figure 4 est une vue schématique illustrant la troisième phase du procédé d'assemblage, selon un premier exemple de réalisation,
- la figure 5 est une vue de dessus d'un vêtement assemblé à l'aide du procédé selon l'invention, selon un premier exemple de réalisation,
- la figure 6 est une vue schématique illustrant une première phase du procédé d'assemblage, selon un second exemple de réalisation,
- la figure 7 est une vue schématique illustrant une seconde phase du procédé d'assemblage, selon un second exemple de réalisation,
- la figure 8 est une vue schématique illustrant une troisième phase du procédé d'assemblage, selon un second exemple de réalisation,

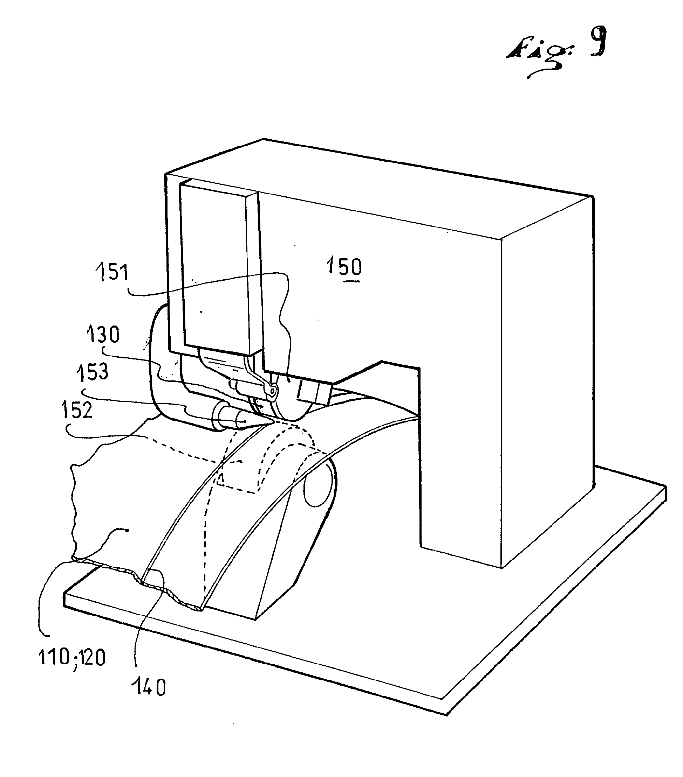

- la figure 9 est une vue schématique illustrant le première étape de pose du ruban d'étanchéité, selon un second exemple de réalisation,

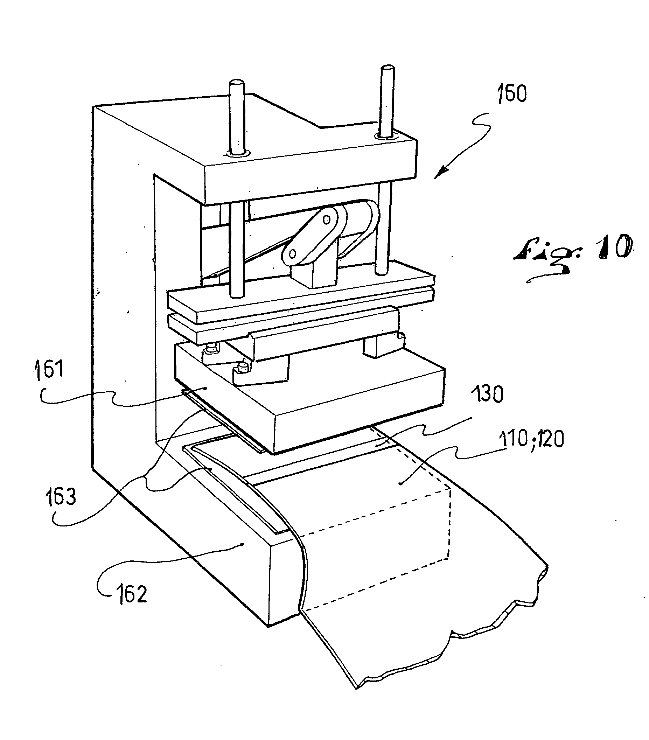

- la figure 10 est une vue schématique illustrant l'étape de fluage du matériau adhésif du ruban d'étanchéité, selon un second exemple de réalisation,

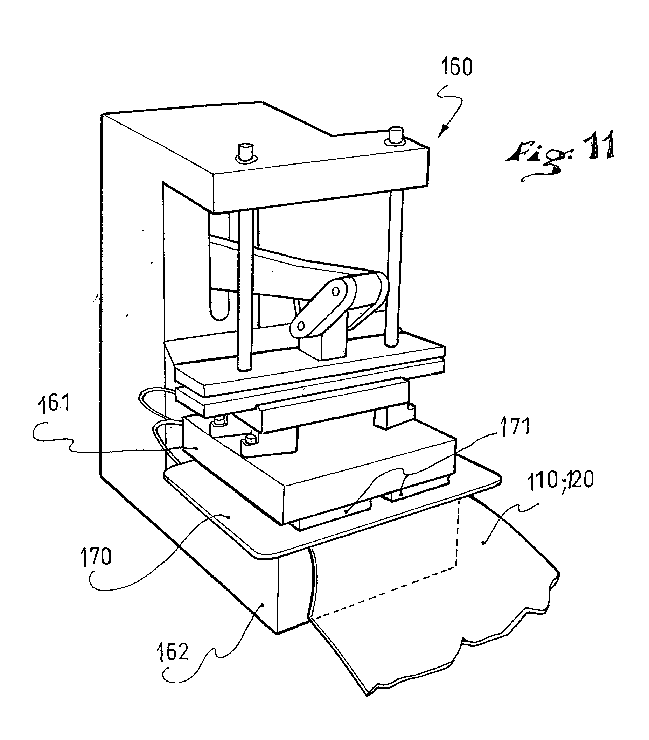

- la figure 11 est une vue schématique illustrant l'étape de refroidissement du ruban adhésif, selon un second exemple de réalisation,
- la figure 12 est une vue d'un vêtement assemblé à l'aide du procédé selon l'invention, selon un second exemple de réalisation,.

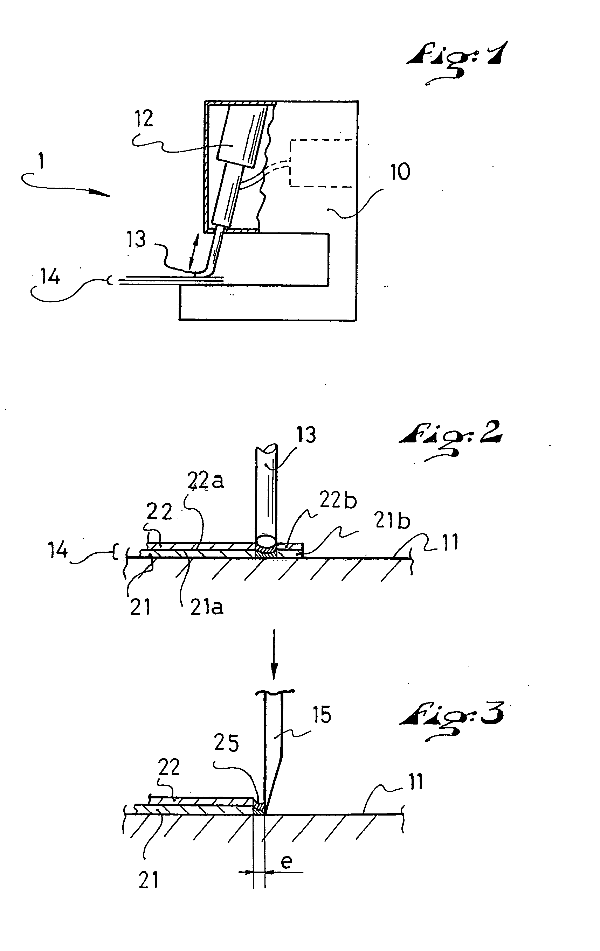

Les figures 1 à 4 illustrent les différentes phases du procédé d'assemblage selon un premier exemple de réalisation de l'invention à l'aide d'une machine de soudage ultrason 1.

Une telle machine est connue par exemple par le US 3, 817, 802 et ne sera donc pas décrite plus en détail. Elle comporte un bâti 10 portant le moteur ultrason ou vibrateur 12, une platine 11 de support des éléments 14 à souder, un outil de soudage 13.

Il existe également d'autres machines de soudage ultrason dans lesquelles les éléments à souder avancent entre deux outils de soudage rotatifs, sous une pression de l'ordre de quelques bars, ce qui permet un assemblage à la manière d'une machine à coudre.

Dans le principe de soudage ultrason des vibrations à une fréquence de l'ordre de 20 à 30 KHz sont appliquées à l'outil de soudage via le vibrateur. Les vibrations échauffent les deux couches de matériau à assembler et provoquent leur soudure mutuelle.

Bien entendu d'autres modes de soudure pourraient être envisagés et notamment les modes de soudure thermique ou à haute fréquence.

Un premier panneau 21 et un second panneau 22 de l'article d'habillement devant être assemblés sont superposés sur la platine support 11 de façon que leurs faces internes respectivement 21a, 22a soient en vis-à-vis c'est-à-dire en contact l'une avec l'autre.

Ces deux panneaux 21 et 22 sont ensuite soudés l'un à l'autre à l'aide de l'outil de soudage 13 le long d'une ligne de soudure 25. Quasi simultanément à l'opération de soudure, l'excès de matière 22b, 21b situé de l'autre côté de la ligne de soudure 25 est enlevé à l'aide d'un outil 15 de type couteau approprié de façon à ne laisser que la ligne de soudure 25 apparente sur le bord des panneaux 21 et 22. La ligne de soudure 25 a alors une épaisseur e maximale de l'ordre de 1 mm.

Après un temps de refroidissement de l'ordre d'une dizaine de secondes les deux panneaux 21-22 qui sont soudés ensemble, sont mis à plat, leurs faces externes respectivement 21c, 22c étant tournées vers le haut. Une bande de renfort 30 est alors appliquée par collage, sur la partie apparente de la ligne de soudure 25. La bande de renfort 30 est en fait une bande complexée constituée d'un support textile (extensible ou non) complexé avec un film de colle thermofusible de type polyuréthane. Il peut s'agir d'une bande thermocollante telle que connue sous la dénomination commerciale Bemis, Ardmel. Le thermocollage s'effectue généralement entre 150 et 220 °C sous une pression 1 à 5 bars.

Du fait de la faible épaisseur e de la ligne de soudure, l'assemblage une fois terminé ne laisse apparaître que la bande de renfort 30 tandis que l'intérieur du vêtement est complètement lisse et ne génère donc aucun frottement sur la peau de l'utilisateur.

Bien entendu les matériaux utilisés pour les panneaux 21, 22 du vêtement et pour la bande de renfort seront appropriés au mode de soudage/collage utilisé.

Par exemple les panneaux 21, 22 pourront être en maille, ou mesh synthétique et notamment en polyamide, polyester.

Les panneaux 21 et 22 peuvent également être en un matériau extensible tel qu'un mélange de polyamide et d'élasthanne (dénomination commerciale Lycra Power). Par exemple pour un matériau 78% polyamide, 22 % élasthanne, l'élongation peut être de 218 % en longueur et 126 % en largeur. Pour un autre exemple de matériau 92,8 % polyamide et 7,2 % élasthanne, l'élongation n'est plus que de 62 % en longueur et 102 % en largeur. En effet la soudure ultrason est relativement extensible et compatible avec une utilisation avec des matériaux extensibles.

Dans tous les cas la bande de renfort 30 est choisie de façon à être également extensible mais avec un taux d'élongation inférieur à celui de la soudure et des panneaux 21, 22 afin de ne pas risquer d'endommager la soudure ultrason. Si aucun des matériaux des panneaux 21, 22 n'est extensible, la bande de renfort 30 pourra également être non extensible..

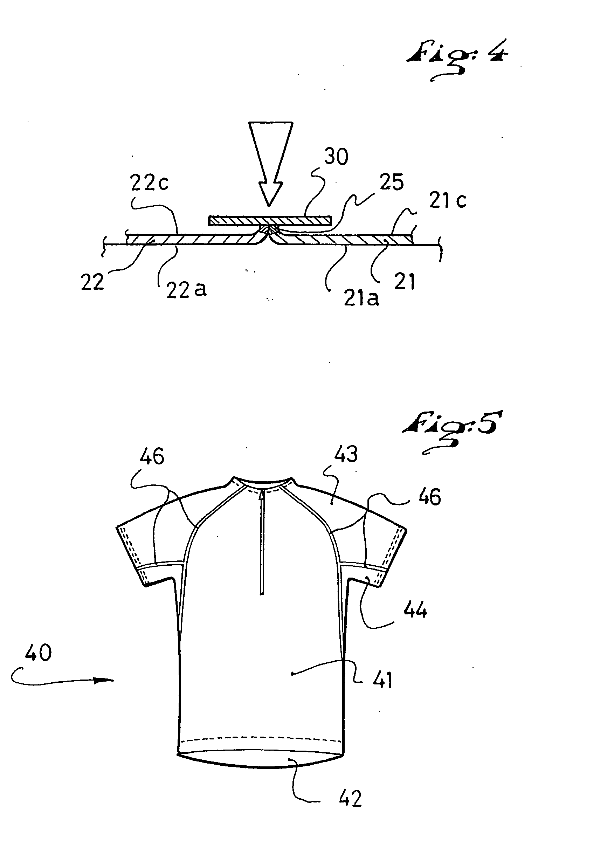

La figure 5 illustre l'application du procédé d'assemblage selon l'invention à un vêtement 40 de type tee-shirt.

Dans ce cas les différents panneaux du tee-shirt, à savoir, devant 41, dos 42, manches 43, dessous de manches 44 sont assemblés par soudage et application de bandes de renfort 46. Selon les matériaux utilisés pour les différents panneaux 41, 42, 43, 44 les bandes de renfort 46 pourront être différentes.

On peut également envisager d'autres applications de l'invention dans lesquelles seuls les panneaux du vêtement les plus sollicités, par exemple la zone des genoux pour un pantalon ou collant, sont réalisés en un matériau extensible, tel que connu sous la dénomination commerciale lycra ou lycra power, et sont assemblés par le procédé selon l'invention. L'invention peut également être appliquée à la fabrication d'autres articles textiles que des vêtements, et notamment à des sacs ou autres, l'effet esthétique obtenu à l'aide du procédé selon l'invention étant particulièrement intéressant..

Les figures 1 à 6 illustrent les différentes phases du procédé selon un second exemple de réalisation de l'invention, appliqué à l'assemblage de deux panneaux laminés 110, 120.

Chaque panneau laminé 110, 120 est constitué d'au moins deux couches respectivement 111,112;121,122.

Selon un premier exemple les panneaux laminés 110, 120 sont des panneaux de tissus traités déperlants (DWR) c'est-à-dire revêtu d'une enduction à base de fluor, teflon ou autre, chaque couche 111, 121 est donc une couche de tissu, soit tissé, soit en maille jersey, en un matériau synthétique tel que PA, PE, polypropylène, avec ou sans fibres élastiques telles que connues sous la dénomination commerciale lycra ®, etc.

Il peut également s'agir d'un tissu muni d'une membrane respiro-étanche (PTFE, PU) connu sous l'appellation "three ply", trois couches, décrits ci-avant.

Chaque couche 112, 122 représente le traitement, déperlant qui peut être par exemple du type connu sous l'une des dénominations commerciales Scotchguard ®, Teflon ® ou autre.

D'autres traitements déperlant et/ou water résistant peuvent également être prévus. Dans le cas décrit, le traitement déperlant est appliqué sur la face externe du tissu, il pourrait également être appliqué sur la face interne.

Dans une première étape du procédé d'assemblage selon l'invention, les deux panneaux 110, 120 sont superposés de façon que leurs faces internes 111a, 121a soient en vis-à-vis c'est-à-dire en contact l'une avec l'autre.

Ces deux panneaux 110, 120 sont ensuite soudés l'un à l'autre à l'aide d'une machine de soudage ultrason (non représentée sur le dessin), à l'aide d'un outil de soudage 141 le long d'une ligne d'assemblage 140.

Les machines de soudure à ultrason sont bien connues par exemple par le US 3 817 802, et la machine utilisée ne sera donc pas décrite en détail.

Dans le principe de soudage par ultrason des vibrations à une fréquence de l'ordre de 20 à 30 KHZ sont appliquées à l'outil de soudage. Les vibrations échauffent les deux couches de matériaux en contact et provoquent leur soudure mutuelle par fusion.

Bien entendu d'autres modes de soudure peuvent être envisagés et notamment les modes de soudure thermique ou à haute fréquence.

On peut également prévoir un assemblage de type plus traditionnel par exemple par couture.

Quasi simultanément à l'opération de soudure, l'excès de matière 110a, 120a situé de l'autre côté de la ligne d'assemblage 140, est enlevé à l'aide d'un outil 142 de type couteau approprié, de façon à ne laisser que la soudure ou ligne d'assemblage 140 apparentes sur le bord des panneaux 110, 120.

La ligne de soudure ou d'assemblage 140 a alors une épaisseur e maximale de l'ordre de 1 mm.

Ce principe d'enlever l'excès de matière 110a, 120a peut également être appliqué avec les autres modes d'assemblage, par exemple par couture, envisageables.

Après un temps de refroidissement à l'air ou autre, de l'ordre d'une dizaine de secondes, les deux panneaux 110, 120, qui sont soudés ensemble, sont mis à plat de façon que leurs faces externes respectivement 111b, 122b soient tournées vers le haut. Un ruban d'étanchéité et de renfort 130 est alors appliqué, par collage sur la partie apparente de la ligne d'assemblage 140.

Dans l'exemple représenté le ruban d'étanchéité 130 est constitué de 4 couches à savoir :
- une première couche 131 de colle d'étanchéité, telle que vendue sous la dénomination commerciale Ardmel TO41, cette colle est extrêmement fluide et fusible à chaud de façon à bien remplir les interstices entre les fibres constituant les tissus 111, 121 et à garantir une bonne étanchéité. Une telle colle a un toucher "collant" à froid.
- une seconde couche 132 de matériau polymère thermofusible ayant une grande résistance mécanique et ayant notamment une grande tenue à la traction, et une grande résistance au lavage et à l'hydrolyse.
- une troisième couche 133 qui est une couche d'enduction ou une membrane à base de PU, PE, polyamide, etc, et qui est destinée à éviter le fluage de la couche 132 c'est à dire de la couche de colle vers l'extérieur, c'est-à-dire vers la 4^{ème} couche.
- une quatrième couche 134, qui est une couche de matériau textile ou autre destinée à fournir une résistance mécanique en direction longitudinale et transversale et un effet décoratif. Cette quatrième couche peut être revêtue d'une impression en couleur ou en relief pour un effet décoratif.

Les deux couches de colle 131, 132 peuvent être combinées en une seule couche.

Selon un mode de réalisation de l'invention, cette couche 134 est dans le même matériau laminé que celui constituant les panneaux 110, 120. Dans ce cas elle est également munie du même traitement ou revêtement extérieur. Dans le cas où la couche 111, 121 de base est un laminé, c'est-à-dire un complexe avec membrane, seule la couche externe de ce laminé c'est-à-dire dépourvue de membrane respiro-étanche, mais avec, ou sans, traitement déperlant, sera utilisée pour la couche 134 de façon à limiter les épaisseurs.

Cette couche 134 peut être dans la même couleur ou dans une couleur différente de façon à contraster avec celle(s) des panneaux 110, 120.

Dans l'exemple décrit, la troisième couche 133 sert à empêcher le fluage de la colle vers la couche externe de décoration 134, pendant les différentes étapes du procédé. On peut également envisager un ruban d'étanchéité, n'ayant que les deux premières couches 131, 132 et donc dépourvu de couche de décoration. Dans un tel cas la troisième couche n'est pas nécessaire, mais la couche de colle 132 est munie d'un grillage ou similaire noyé dedans qui lui confère la résistance mécanique et la finition nécessaires.

Le collage du ruban d'étanchéité 130 est effectué selon 3 étapes différentes illustrées à l'aide des figures 4 à 6.

Dans une première étape illustrée à la figure 4, le ruban 130 est appliqué à l'aide d'une presse 50 ou machine à poser des rubans d'étanchéité telle que vendue sous les dénominations commerciales Pfaff ou Ardmel, de type connue, munie de rouleaux 151, 152 entraînant le ruban d'étanchéité 130 et les panneaux laminés 110, 120 assemblés, le matériau adhésif du ruban 130 étant au préalable ramolli par de l'air chaud provenant d'une buse 153.

La température de l'air chaud est de 130°C en sortie de buse et la pression d'assemblage est de 5 bars. Bien entendu la température et la pression d'assemblage peuvent être différentes en fonction des textiles à assembler et du ruban d'étanchéité utilisés.

Une telle opération permet un assemblage du ruban 130 tel que décrit dans le premier exemple de réalisation, qui est satisfaisant pour la tenue du ruban et de la ligne d'assemblage 140, même si l'assemblage est effectué par soudage, mais insuffisant pour garantir une bonne étanchéité dudit assemblage et donc du vêtement et/ou sac dans son ensemble.

L'assemblage étanche proprement dit est effectué à l'aide de deux étapes suivantes.

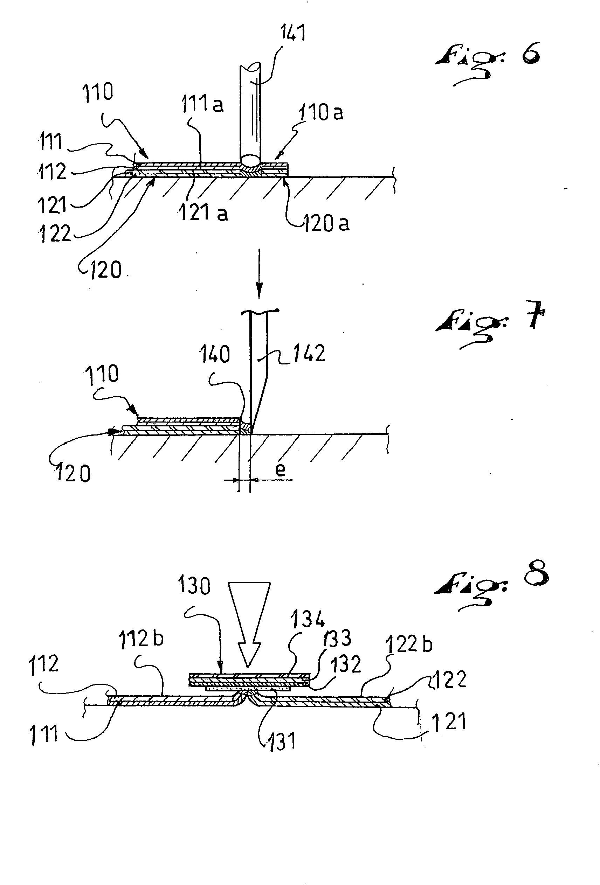

Dans la seconde étape montrée à la figure 6, les deux panneaux assemblés munis du ruban d'étanchéité 130 sont pressés à chaud entre les deux plateaux 161, 162 d'une presse. Le plateau supérieur mobile 161 est chauffant et porté à une température entre 130 et 150°C qui dépend de la nature du polymère constituant la première couche 131 du ruban d'étanchéité et de la nature des textiles à assembler, des feuilles de papier siliconé 163 peuvent être interposées entre chaque plateau chauffant et les panneaux 110, 120 pour éviter le fluage de la colle sur ces dits plateaux. Selon le mode de réalisation décrit cette température est de l'ordre de 150°C, la pression de 2 bars et la durée d'application est d'environ 25 secondes. Cette phase de pressage à chaud permet de garantir un bon fluage de la couche 131 jusqu'à pénétration dans tous les interstices entre les fibres.

A l'issue de cette phase de pressage à chaud, le plateau supérieur 161 est relevé, et abaissé de nouveau après interposition d'une plaque métallique froide 170 munie de plots isolants 171 pour éviter toute transmission de chaleur du plateau supérieur à ladite plaque froide.

Cette plaque froide 170 peut être simplement à température ambiante ou être refroidie à une température de l'ordre de 0 à 10°C selon le type de colle.

La plaque froide 170 est maintenue sous une pression de 2 bars pendant 5 à 10 secondes. La presse peut également être une presse comportant deux plateaux pivotants pour le pressage à chaud ou à froid.

Durant cette dernière phase on réalise un pressage à froid, qui bloque tout retrait de la première couche de collage 31 et garantit donc une parfaite répartition de la colle à l'intérieur des interstices du tissu et par conséquent une bonne étanchéité.

Cette phase est donc particulièrement importante pour l'étanchéité de l'assemblage final.

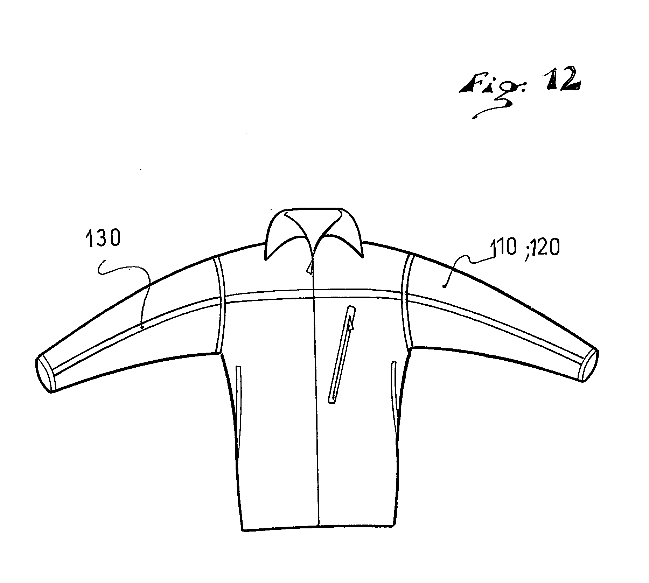

A l'aide du procédé d'assemblage et d'étanchéité décrit ci-avant, on obtient un assemblage étanche à 2m (200 mm) ou 200 mbar avec une montée en pression de 60mb/mm selon la méthode d'essai dynamique de la norme ISO 811 et, selon la méthode d'essai dynamique de la norme AATCC 127. La figure 12 montre un exemple de vêtement réalisé à l'aide de l'invention, en l'occurrence un tee-shirt à manches longues, constitué de panneaux laminés 110, 120 assemblés selon le procédé, leurs lignes d'assemblage étant recouvertes des rubans d'étanchéité 130.

Bien entendu la présente invention n'est pas limitée aux seuls exemples de réalisation décrits ci-avant et elle s'applique notamment aussi aux sacs en matériau souples et aux textiles étanches et/ou résistants à l'eau, que ceux-ci soient des laminés comme décrits ou non.

Elle peut également être appliquée à tout type d'assemblage de produits réalisés en des matériaux textiles revêtus d'une enduction étanche et/ou résistants à l'eau.

Dans le cas du second exemple de réalisation décrit, les panneaux laminés peuvent être extensibles comme dans le premier exemple de réalisation décrit et dans ce cas, le ruban d'étanchéité 130 possède un taux d'élongation inférieur à celui de la ligne d'assemblage 140 surtout lorsque celle-ci et réalisée par soudure.

## Revendications

1. Article textile **caractérisé en ce qu'**il comporte au moins un premier et second panneau respectivement (21,110, 22,120) assemblés par soudure selon une ligne de soudure (25,140), cette soudure étant tournée vers l'extérieur et recouverte d'une bande de renfort (30,130).

2. Article textile selon la revendication 1, **caractérisé en ce que** la ligne de soudure a une épaisseur d'environ 1mm ou moins.

3. Article textile selon l'une des revendications 1 ou 2, **caractérisé en ce que** les premier et second panneaux (21,110, 22,120) sont en un matériau élastique.

4. Article textile selon l'une des revendications 1 à 3, **caractérisé en ce que** la bande de renfort (30,130) a un taux d'élongation inférieur à celui de la soudure (25,140).

5. Article textile selon l'une des revendications 1 à 4, **caractérisé en ce que** les panneaux (21, 22) comportent du polyamide ou polyester.

6. Article textile selon l'une des revendications 1 à 5, **caractérisé en ce que** les panneaux (21, 22) comportent un mélange de polyamide et d'élasthanne.

7. Article textile selon l'une des revendications 1 à 6, **caractérisé en ce qu'**il s'agit d'un vêtement porté à même la peau tel qu'un tee-shirt, collant, pantalon

8. Article textile comprenant au moins deux panneaux laminés (110, 120), chaque panneau laminé (110, 120) comprenant au moins une couche de matériau textile (111, 121) et au moins une couche de protection (112, 122) résistante à l'eau fixée sur le matériau textile, les deux panneaux (110, 120) étant assemblés selon une ligne d'assemblage (140) déterminée, **caractérisé en ce que** la ligne d'assemblage est recouverte d'un ruban d'étanchéité (130) muni d'un adhésif (131, 132) thermofusible, et **en ce que** cet adhésif, a flué au moins partiellement entre les interstices à l'intérieur des fibres du matériau textile.

9. Article textile selon la revendication 8, **caractérisé en ce que** l'assemblage des deux panneaux (110, 120) est effectué par soudure..

10. Article textile selon la revendication 9, **caractérisé en ce que** l'assemblage des deux panneaux (110, 120) est effectué par couture.

11. Article textile selon l'une des revendications 8 à 10, **caractérisé en ce que** l'excès de matière au-delà de la ligne d'assemblage (140) est coupé avant l'adjonction du ruban d'étanchéité.

12. Article textile selon les revendications 8 à 11, **caractérisé en ce que** l'adhésif thermofusible comporte une première couche (131) de polymère thermofusible imprégnant les interstices entre les fibres du matériau textile dans la couche extérieure de la ligne d'assemblage, une seconde couche (132) de polymère thermofusible ayant des caractéristiques de tenue mécanique.

13. Article textile selon la revendication 12, **caractérisé en ce que** la seconde couche (132) de polymère thermofusible a des caractéristiques de résistance à la traction et de résistance au lavage et à l'hydrolyse.

14. Article textile selon l'une des revendications 12 ou 13, **caractérisé en ce que** la seconde couche (132) de polymère est en PU.

15. Article textile selon l'une des revendications 8 à 14, **caractérisé en ce que** le ruban d'étanchéité (130) comporte également une couche de matériau textile (134).

16. Article textile selon la revendication 15, **caractérisé en ce que** la couche de matériau textile (134) est la même que celle constituant au moins la face externe de chacun des laminés (110, 120).

17. Article textile selon l'une des revendications 8 à 16, **caractérisé en ce que** le ruban d'étanchéité (130) est appliqué sur la face externe des deux panneaux laminés (110, 120).

18. Article textile selon l'une des revendications 8 à 17, **caractérisé en ce que** le ruban d'étanchéité (130) est appliqué sur la face interne des panneaux laminés (110, 120).

19. Article textile selon l'une des revendications 17 ou 18, **caractérisé en ce que** le ruban d'étanchéité (130) comporte une couche d'enduction ou membrane (133) interposée entre la couche d'adhésif et la couche de matériau textile (134).
